# FASCICULE DE BREVET EUROPEEN

(11) **EP 1 542 443 B1**
(45) Date de publication et mention de la délivrance du brevet: **04.06.2008**
(21) Numéro de dépôt: 04292822.6
(22) Date de dépôt: 30.11.2004
(51) Int. Cl.: H04M 3/56, H04Q 7/38

(54) **Procédé de réalisation d'un échange de données pendant un appel de groupe sur un réseau cellulaire**
Verfahren zur Realisierung eines Datenaustausches während eines Gruppenanrufes in einem zellularen Netzwerk
Method for providing a data exchange during a group call in a cellular network

(30) Priorité: 09.12.2003 FR 0314401
(43) Date de publication de la demande: 15.06.2005
(73) Titulaire: Sagem Communications, 75015 Paris (FR)
(72) Inventeur: De Graeve, Frédéric, 75017 Paris (FR); Dorion, Marc, 69009 Lyon (FR)
(74) Mandataire: Fruchard, Guy

(56) Documents cités:
- WO-A-01/86975
- US-A1- 2003 048 764
- US-B1- 6 178 166
- "Digital cellular telecommunications system (Phase 2+); Voice Group Call Service (VGCS); Stage 2 (3GPP TS 43.068 version 5.2.0 Release 5); ETSI TS 143 068" ETSI STANDARDS, EUROPEAN TELECOMMUNICATIONS STANDARDS INSTITUTE, SOPHIA-ANTIPO, FR, vol. 3-CN1, no. V520, décembre 2002 (2002-12), XP014010506 ISSN: 0000-0001
- "Digital cellular telecommunications system (Phase 2+); Voice Broadcast service (VBS); Stage 2 (3GPP TS 43.069 version 5.2.0 Release 5); ETSI TS 143 069" ETSI STANDARDS, EUROPEAN TELECOMMUNICATIONS STANDARDS INSTITUTE, SOPHIA-ANTIPO, FR, vol. 3-CN1, no. V520, décembre 2002 (2002-12), XP014010512 ISSN: 0000-0001

## Description

La présente invention concerne un procédé de réalisation d'un échange de données pendant un appel de groupe sur un réseau cellulaire.

### ARRIERE PLAN DE L'INVENTION

On sait que sur un réseau cellulaire de type GSM (abréviation de l'anglais Global System for Mobile communication) il est possible de réaliser un appel de groupe du type VGCS (abréviation de l'anglais Voice Group Call Service) ou VBS (abréviation de l'anglais Voice Broadcast Service).

La procédure de réalisation d'un appel de groupe est décrite en particulier dans le document 3GPP TS 143068. Lors d'un appel de groupe l'un des participants, dénommé orateur, est relié au réseau par un canal dédié sur lequel il dispose d'une voie montante et d'une voie descendante tandis que les autres participants, dénommés auditeurs, sont reliés au réseau par un canal de groupe sur lequel ils ne disposent normalement que de la voie descendante. La voie montante du canal de groupe est réservée à la présentation d'une requête en vue de devenir orateur. Afin d'avertir les utilisateurs une information est diffusée sur le statut de la voie montante.

Par ailleurs, on sait que pour établir un échange de données avec un interlocuteur identifié, il est nécessaire de disposer d'une voie montante pour envoyer les données émises et acquitter les données reçues. Dans le cas d'un appel de groupe il n'est donc pas possible pour un auditeur de procéder à des échanges de données alors même que le canal de groupe n'est occupé que pour transmettre des signaux de voix.

### OBJET DE L'INVENTION

Un but de l'invention est de proposer un procédé permettant un échange de données pendant un appel de groupe.

### BREVE DESCRIPTION DE L'INVENTION

En vue de la réalisation de ce but, on propose selon l'invention un procédé de réalisation d'un échange de données pendant un appel de groupe entre un orateur et plusieurs auditeurs connectés par l'intermédiaire d'un réseau sur un canal de groupe comportant une voie montante et une voie descendante, une information de statut de la voie montante étant diffusée sur la voie descendante, le procédé comportant les étapes d'autoriser une transmission de données sur requête d'un auditeur lorsque la voie montante du canal de groupe est disponible, et de diffuser simultanément sur la voie descendante du canal de groupe une information d'occupation de la voie montante du canal de groupe.

Ainsi, la voie montante du canal de groupe qui est disponible de façon presque permanente est utilisée de façon partagée par les différents auditeurs, aucune interférence n'étant à craindre en raison du verrouillage de la voie montante lorsqu'une transmission de données est en cours entre le réseau et l'un des auditeurs.

Selon une version avantageuse de l'invention, pour la transmission de données à partir du réseau vers un auditeur, le procédé comporte en outre l'étape de diffuser sur la voie descendante du canal de groupe un message invitant l'auditeur concerné à établir une requête en transmission de données. On minimise ainsi les requêtes spontanées qui pourraient être présentés par les auditeurs pour déterminer s'ils ont des données en attente d'être reçues.

Selon un autre aspect avantageux de l'invention, lors d'une requête en transmission de données présentée par un auditeur, le réseau affecte à cet auditeur un canal dédié ayant une voie descendante sur laquelle sont envoyés les mêmes signaux que ceux diffusés sur la voie descendante du canal de groupe. Ainsi, la voie montante du canal de groupe n'est utilisée que pendant le temps de présentation de la requête en transmission de données et redevient immédiatement disponible après l'établissement du canal dédié de sorte que plusieurs auditeurs peuvent réaliser simultanément des échanges de données sur le canal dédié qui leur a été affecté.

### BREVE DESCRIPTION DES DESSINS

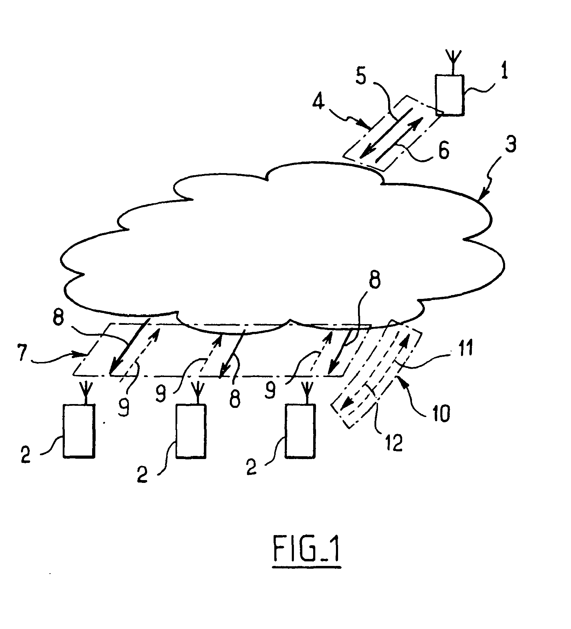

D'autres caractéristiques et avantages de l'invention apparaîtront à la lecture de la description qui suit de deux modes de mise en oeuvre non limitatifs du procédé selon l'invention en relation avec la figure unique ci-jointe qui est une représentation schématique du réseau sur lequel le procédé selon l'invention est mis en oeuvre.

### DESCRIPTION DETAILLEE DE L'INVENTION

En référence à la figure, le procédé selon l'invention est mis en oeuvre dans le cadre d'un appel de groupe entre un orateur 1 et plusieurs auditeurs 2 connectés par l'intermédiaire d'un réseau 3. De façon connue en soi, l'orateur 1 est relié au réseau 3 par un canal dédié 4 comprenant une voie montante 5 et une voie descendante 6 qui sont toujours disponibles pour l'orateur de sorte que celui-ci peut non seulement envoyer sur le réseau des signaux de voix mais également échanger avec le réseau des signaux de données, en particulier des messages écrits habituellement dénommés SMS (abréviation de l'anglais Short Message Service). Les auditeurs 2 sont reliés au réseau 3 par un canal de groupe 7 comprenant une voie descendante 8 servant à diffuser simultanément à tous les auditeurs les signaux de voix provenant de l'orateur 1, et une voie montante 9 qui a été représentée en tirets sur la figure pour montrer qu'elle est normalement destinée à permettre seulement la transmission au réseau de requêtes visant à transformer l'auditeur en orateur. Afin que des requêtes ne soient pas présentées simultanément par plusieurs auditeurs, la voie montante 9 du canal de groupe 8 est bloquée dès l'instant où l'un des auditeurs présente une requête et reste bloquée pendant tout le temps de traitement de cette requête. Afin que les auditeurs soient prévenus, le réseau diffuse sur la voie descendante 8 du canal de groupe 7 d'une façon périodique connue en soi une information sur le statut de la voie montante 9 du canal de groupe. En pratique la voie montante 9 du canal de groupe est disponible pendant une très large majorité du temps.

Selon l'invention cette disponibilité de la voie montante du canal de groupe est utilisée pour présenter des requêtes en transmission de données. Dans le sens montant, c'est-à-dire lorsque l'un des auditeurs souhaite par exemple envoyer un SMS vers le réseau, l'auditeur détecte un instant où la voie montante du canal de groupe est disponible pour envoyer une requête visant à établir une liaison lui permettant de transmettre son SMS.

Dans le sens descendant, c'est-à-dire lorsque le SMS provient d'un utilisateur du réseau, la liaison ne peut pas être établie directement avec l'auditeur concerné en raison de l'absence de canal dédié avec celui-ci. Dans ce cas le réseau diffuse sur la voie descendante 8 du canal de groupe un signal qui est perçu par tous les auditeurs mais qui identifie l'auditeur qui est invité à présenter une requête pour assurer une transmission de données. Comme précédemment, l'auditeur procède alors à une requête à un instant où la voie montante 9 du canal de groupe est disponible. Tout en restant connecté au canal de groupe, il est donc possible pour les différents auditeurs d'échanger des données avec le réseau. Toutefois, on remarquera que selon le premier mode de mise en oeuvre qui vient d'être décrit, la voie montante 9 du canal de groupe reste occupée pendant toute la durée de l'échange de données avec l'auditeur concerné afin de permettre un acquittement des signaux de données reçus par cet auditeur. Pendant ce temps, les autres auditeurs ne peuvent donc pas procéder à un échange de données.

Selon un second mode de mise en oeuvre du procédé selon l'invention, lors d'une requête présentée par un auditeur, le réseau affecte temporairement à cet auditeur un canal dédié 10 comportant une voie montante 11 et une voie descendante 12, ce qui permet de libérer immédiatement la voie montante 9 du canal de groupe 7. Afin que l'auditeur auquel un canal dédié a été affecté ne soit pas coupé de l'appel de groupe, le réseau envoie sur la voie descendante 12 du canal dédié 10, des signaux identiques à ceux qui sont diffusés sur la voie descendante 8 du canal de groupe. On notera à ce propos que ces signaux qui sont des signaux de voix ou des signaux de signalisation non dédiés, n'interfèrent pas avec les signaux de données qui peuvent être échangés sur le canal dédié 10. Lorsque l'échange de données est terminé, l'auditeur concerné est reconnecté automatiquement sur le canal de groupe.

Bien entendu, l'invention n'est pas limitée aux modes de mise en oeuvre décrits et on peut y apporter des variantes de réalisation sans sortir du cadre de l'invention tel que défini par les revendications.

En particulier, bien que l'invention ait été décrite en relation avec l'envoi de SMS, le procédé selon l'invention peut être utilisé pour effectuer tout échange de données en relation avec une application quelconque.

## Revendications

1. Procédé de réalisation d'un échange de données pendant un appel de groupe entre un orateur (1) et plusieurs auditeurs (2) connectés par l'intermédiaire d'un réseau (3) sur un canal de groupe (7) comportant une voie montante (9) et une voie descendante (8), une information de statut de la voie montante (9) étant diffusée sur la voie descendante (8) **caractérisé en ce qu'**il comporte les étapes d'autoriser une transmission de données sur une requête d'un auditeur (2) lorsque la voie montante (9) est disponible, et de diffuser simultanément sur la voie descendante (8) du canal de groupe (7) une information d'occupation de la voie montante (9) du canal de groupe.

2. Procédé selon la revendication 1 pour la transmission de données à partir du réseau (3) vers un auditeur (2), **caractérisé en ce qu'**il comporte en outre l'étape de diffuser sur la voie descendante (8) du canal de groupe un signal invitant l'auditeur concerné à établir une requête en transmission de données.

3. Procédé selon la revendication 1, **caractérisé en ce que** lors d'une requête en transmission de données présentée par un auditeur (2), le réseau (3) affecte à cet auditeur un canal dédié (10) ayant une voie descendante (12) sur laquelle sont envoyés des signaux identiques à ceux diffusés sur la voie descendante (8) du canal de groupe (7).

## Claims

1. A method of exchanging data during a group call between a speaker (1) and a plurality of listeners (2) connected via a network (3) to a group channel (7) comprising an uplink (9) and a downlink (8), information concerning the status of the uplink (9) being broadcast over the downlink (8), the method being **characterized in that** it comprises the steps of allowing data to be transmitted on a request from a listener (2) when the uplink (9) is available, and of simultaneously broadcasting over the downlink (8) of the group channel (7) information to the effect that the uplink (9) of the group channel is busy.

2. A method according to claim 1 for transmitting data from the network (3) to a listener (2), the method being **characterized in that** it further comprises the step of broadcasting a signal over the downlink (8) of the group channel inviting the listener concerned to establish a request for data transmission.

3. A method according to claim 1, **characterized in that** when a listener (2) presents a request to transmit data, the network (3) allocates a dedicated channel (10) to that listener, said dedicated channel having a downlink (12) over which signals are sent that are identical to the signals broadcast over the downlink (8) of the group channel (7).

## Patentansprüche

1. Verfahren zur Realisierung eines Datenaustausches während eines Gruppenanrufs zwischen einem Redner (1) und mehreren Zuhörern (2), die über ein Netzwerk (3) auf einem Gruppenkanal (7) verbunden sind, der eine Aufwärtsstrecke (9) und eine Abwärtsstrecke (8) umfasst, wobei eine Statusinformation über die Aufwärtsstrecke (9) auf der Abwärtsstrecke (8) übertragen wird, **dadurch gekennzeichnet, dass** es die Schritte umfasst: Autorisieren einer Datenübertragung auf Antrag eines Hörers (2) bei verfügbarer Aufwärtsstrecke und gleichzeitiges Übertragen einer Besetztinformation der Aufwärtsstrecke (9) des Gruppenkanals auf der Abwärtsstrecke (8) des Gruppenkanals (7).

2. Verfahren nach Anspruch 1 für die Datenübertragung von einem Netzwerk (3) zu einem Hörer (2), **dadurch gekennzeichnet, dass** es ferner den Schritt umfasst: Übertragen auf der Abwärtsstrecke (8) des Gruppenkanals eines Signals, das den betreffenden Hörer auffordert, eine Datenübertragungsanfrage zu stellen.

3. Verfahren nach Anspruch 1, **dadurch gekennzeichnet, dass** bei einer Datenübertragungsanfrage, die von einem Hörer (2) gestellt wird, das Netzwerk (3) diesem Hörer einen ihm gewidmeten Kanal (10) zuteilt, der eine Abwärtsstrecke (12) hat, auf der Signale gesendet werden, die identisch zu denjenigen sind, die auf der Abwärtsstrecke (8) des Gruppenkanals (7) übertragen werden.
